# EUROPÄISCHE PATENTSCHRIFT

(11) **EP 3 372 292 B1**
(45) Veröffentlichungstag und Bekanntmachung des Hinweises auf die Patenterteilung: **14.04.2021**
(21) Anmeldenummer: 17000359.4
(22) Anmeldetag: 07.03.2017
(51) Int. Cl.: B01D 33/044, B01D 33/056

(54) **BANDFILTER**
BAND FILTER
FILTRE À BANDE

(43) Veröffentlichungstag der Anmeldung: 12.09.2018
(73) Patentinhaber: Dipl.-Ing. Erich Fetzer GmbH & Co. KG, 72770 Reutlingen (DE)
(72) Erfinder: WAGNER, Jürgen, 72770 Reutlingen (DE)
(74) Vertreter: Späth, Dieter

(56) Entgegenhaltungen:
- DE-A1- 10 320 532
- DE-C- 502 672
- DE-U1- 9 011 319

## Beschreibung

Die Erfindung betrifft ein Bandfilter mit den Merkmalen des Oberbegriffs des Anspruchs 1.

Bandfilter sind an sich bekannt. Sie weisen ein Filterband beispielsweise aus einem Vlies auf, das auf einer Kreisbogenbahn unten um zwei voneinander beabstandete, drehbare Scheiben oder Ringe geführt ist und dadurch eine Filtermulde bildet. An Stirnseiten wird die Filtermulde von den Scheiben oder von Wandungen, an deren einander zugewandten Innenseiten die kreisförmigen Ringe drehbar angebracht sind, begrenzt. Das Filterband kann von einer Rolle abgewickelt und nach Gebrauch in einen Auffangbehälter geleitet werden öder es kann endlos ausgeführt und um die Filtermulde herum, vorzugsweise unter der Filtermulde hindurch, geführt sein. In diesem Fall muss das Filterband gereinigt werden, bevor es die Filtermulde wieder durchläuft.

Üblicherweise ist ein Stützband vorgesehen, welches sich im Bereich der Filtermulde auf einer Außenseite des Filterbandes befindet und das Filterband in Anlage an einem Außenumfang der drehbaren Scheiben oder Ringe hält. Das Stützband ist vielfach als Gliederband ausgebildet und stützt das Filterband von außen bzw. von unten. Das Stützband ist üblicherweise endlos und wird um die Filtermulde herum, vorzugsweise unter ihrer Unterseite, zurückgeführt.

Zu filternde Flüssigkeit wird in die Filtermulde eingeleitet und tritt durch das Filterband durch, wobei Schmutzpartikel sich auf dem Filterband absetzen. Die Schmutzpartikel bilden einen gewünschten Filterkuchen, der eine Filterwirkung des Filterbandes verbessert. Durch Fördern des Filterbandes wird das verschmutze Filterband mit dem aus den Schmutzpartikeln bestehenden Filterkuchen aus der Filtermulde entfernt und unbenutztes oder gereinigtes Filterband nachgeführt. Die Förderung des Filterbandes kann- kontinuierlich oder schrittweise erfolgen. Die durch das Filterband durchgetretene, gereinigte Flüssigkeit (Filtrat) wird in einer Wanne oder dgl. aufgefangen, wobei auch ein Gehäuse des Bandfilters die Wanne bilden kann. Beispiele derartiger Bandfilter zeigen beispielsweise die EP 0 331 020 A2 oder die DE 84 08 211 U1.

Die Patentanmeldungen DE 42 20 400 A1 und FR 2 806 926 offenbaren Bandfilter mit feststehenden anstatt drehbarer Bandführungen. Das ermöglicht auch nicht kreisförmige Bandführungen. Die Bandführungen der bekannten Bandfilter sind leistenförmig und in einer Richtung, allerdings mit sich ändernder Krümmung, gekrümmt, wobei eine konkave Seite nach oben und eine konvexe Seite nach unten gerichtet ist, so dass ein Filterband, das um die konvexen Außen- oder Unterseiten der Bandführungen geführt ist, eine Filtermulde bildet. Die Bandführungen sind an Innenseiten zueinander paralleler und voneinander beanstandeter Seitenwände der Bandfilter angeordnet.

Um das Filterband zu stützen, weisen die bekannten Bandfilter ein Stützband auf, die auf einer den Bandführungen abgewandten Außen- und Unterseite des Filterbandes angeordnet ist. Das Stützband der bekannten Bandfilter ist ein endloses Gliederband, das umlaufend und unter den Bandführungen zurück geführt ist und sich mit dem Filterband mit bewegt. Das Stützband hält durch seine Spannung an den konvexen außen- und Unterseiten der Bandführungen, wobei sich das Filterband zwischen dem Stützband und den Bandführungen befindet. Dazu muss das Stützband in seiner Längsrichtung gespannt werden. Bei hoher Belastung beispielsweise durch Metallspäne und/oder großen Bandfiltern ist eine hohe Spannung des Stützbandes notwendig, um das Stützband an den Bandführungen zu halten. Außerdem kann sich insbesondere bei breiten Bandfiltern das Stützband in einer Querrichtung zwischen den Bandführungen bzw. zwischen seinen Seitenrändern durchbiegen.

Das Gebrauchsmuster DE 90 11 319 U1 offenbart ein Bandfilter mit zwei Kreisscheiben, die mit einer Welle starr miteinander verbunden sind, als Bandführungen für zwei aneinander anliegende Filterbänder, die nach dem Bandfilter voneinander getrennt werden. Die beiden Kreisscheiben stützen sich auf Umlenkwalzen ab, die an einem Umfang der Kreisscheiben angeordnet sind. Die beiden Filterbänder sind zwischen den Umlenkwalzen und den Kreisscheiben auf einem Umfang von etwa 180° unten um die beiden Kreisscheiben herum geführt. Zusätzlich zu den Umlenkwalzen können Stützbänder oder dergleichen vorgesehen werden.

Die Offenlegungsschrift DE 103 20 532 A1 offenbart ein Bandfilter mit einem in Seitenansicht trapezförmig geführten Filterband und einem endlosen Gliederband als Stützband, das unter dem Filterband um Umlenkrollen umlaufend geführt ist und auf dessen oberem Trum das Filterband aufliegt. Längsränder des oberen Trums des Stützbandes liegen in Stufen von Gleitleisten auf, die innen an Seitenwänden einer Wanne des Bandfilters befestigt sind. Von oben werden endlose Dichtbänder gegen Längsränder des Filterbandes gedrückt, die in Längsnuten von Andruckschienen geführt sind, die höhenverstellbar innen an den Seitenwänden der Wanne des Bandfilters und über den Gleitleisten angeordnet sind und die federbeaufschlagt von oben gegen die Längsränder des Filterbandes gedrückt werden. Die Dichtbänder sind in Seitenansicht trapezförmig über dem oberen Trum des Filterbandes um die Andruckschienen und um Umlenkrollen umlaufend geführt und können synchron zum Filterband und/oder dem Stützband angetrieben sein.

Aufgabe der Erfindung ist eine Verbesserung einer Abstützung eines Filterbandes eines Bandfilters der vorstehend erläuterten Art.

Diese Aufgabe wird durch ein Bandfilter mit den Merkmalen des Anspruchs 1 gelöst. Das erfindungsgemäße Bandfilter weist ein Filterband auf, dass entlang konvexer Seiten von Bandführungen geführt ist. Die Bandführungen können kreisförmig und drehbar oder feststehend sein, was auch nicht kreisförmige, gleichwohl bogenförmige Bandführungen erlaubt. Konvexe Seiten der Bandführungen, die auch als Außenseiten aufgefasst werden können, sind in einer Gebrauchslage des Bandfilters typischerweise nach unten gerichtet und können deswegen auch als Unterseiten aufgefasst werden. Typischerweise hat das Bandfilter zwei Bandführungen in zueinander parallelen und voneinander beanstandeten Ebenen an Seitenrändern des Filterbandes.

Um das Filterband in Anlage an den konvexen Seiten der Bandführungen zu halten, weist das erfindungsgemäße Bandfilter ein fluiddurchlässiges Stützband auf, das auf einer den Bandführungen abgewandten Außenseite des Filterbandes angeordnet ist und an dessen den Bandführungen zugewandter Innenseite das Filterband anliegt. Eine Stütze, die auf einer den Bandführungen abgewandten Außenseite angeordnet ist, stützt das Stützband von außen. Eine Abstützung in einer Mitte zwischen den Bandführungen oder mehrere Abstützungen nebeneinander stützen das Stützband gegen Durchbiegung in einer Querrichtung. Eine Abstützung an den Bandführungen hält das Filterband über das Stützband an den Bandführungen. Eine Durchbiegung des Stützbandes und mit ihm des Filterbandes in der Querrichtung, die die erfindungsgemäße Stütze vermeidet oder der die erfindungsgemäße Stütze zumindest entgegenwirkt, hat auch zur Folge, dass sich das Filterband in der Querrichtung verkürzt und dadurch zur Seite nach innen von den Bandführungen herunter gezogen wird. Das vermeidet die Erfindung durch die Stütze auf der Außenseite des Stützbandes.

Um das Stützband über das zwischenliegende Filterband an den Bandführungen zu halten, sieht die Erfindung eine Verstelleinrichtung vor, mit der sich die Stütze quer zu den Bandführungen verstellen lässt. Die Verstelleinrichtung kann auch als Andruckeinrichtung aufgefasst werden. Mit der Verstelleinrichtung lässt sich ein Abstand der Stütze von den Bandführungen einstellen und das Stützband mit einstellbarer Andruckkraft über das Filterband gegen die Bandführungen drücken. Zum Einführen eines neuen Filterbandes zwischen die Bandführungen und das Stützband lässt sich die Stütze mit der Verstelleinrichtung in einen Abstand von den Bandführungen bringen. Mehrere Stützen können einzeln, in Gruppen oder gemeinsam mit mehreren oder einer Verstelleinrichtung quer zu den Bandführungen verstellt werden.

Vorzugsweise erstreckt sich die Stütze über eine Breite des Stützbandes, wobei die Stütze durchgehend ausgebildet oder an einzelnen, voneinander in der Querrichtung beanstandeten Stellen vorhanden sein kann. Vorzugsweise ist die Stütze oder sind die Stützen nicht nur zwischen sondern auch an den Bandführungen angeordnet und drücken das Filterband über das Stützband gegen die konvexen Seiten der Bandführungen.

Eine bevorzugte Ausgestaltung der Erfindung sieht mehrere Stützen vor, die über eine Länge der Bandführungen gleich- oder ungleichmäßig verteilt angeordnet sind. Bereits eine Stütze verbessert eine Anlage des Stützbandes über das zwischenliegende Filterband an den Bandführungen. Mehrere über die Länge der Bandführungen verteilt angeordnete Stützen verbessern die Anlage des Filterbandes und des Stützbandes an den Bandführungen weiter. Dadurch wird eine Anlage des Filterbandes an den Bandführungen mit einer kleineren Spannung des Stützbandes in der Längsrichtung erzielt. Eine Anlage des Filterbandes an den Bandführungen ist notwendig, damit kein Fluid ungefiltert zwischen dem Filterband und den Bandführungen durchtritt.

Eine Ausgestaltung der Erfindung sieht eine Stützrolle oder mehrere Stützrollen als Stütze oder Stützen vor, die das Stützband auf der den Bandführungen abgewandten Außenseite stützen, um eine Durchbiegung des Stützbandes in der Querrichtung zu vermeiden und/oder über das Stützband das Filterband in Anlage an den Bandführungen zu halten. Vorzugsweise erstreckt sich die Stützrolle oder erstrecken sich die Stützrollen über eine Breite des Stützbandes, es ist allerdings auch möglich, mehrere Stützrollen oder Stützräder nebeneinander anzuordnen. Vorzugsweise sind mehrere Stützrollen gleich- oder ungleichmäßig über die Länge der Bandführungen verteilt angeordnet.

Das Stützband ist beispielsweise ein Gliederband, insbesondere ein Wabenband und besteht vorzugsweise aus Metall.

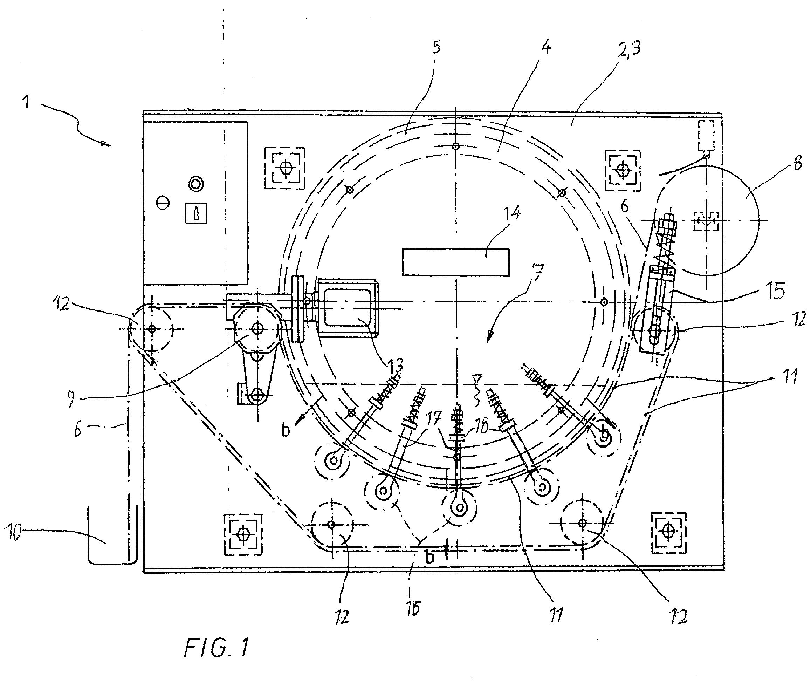

Die Erfindung wird nachfolgend anhand eines in der Zeichnung dargestellten Ausführungsbeispiels näher erläutert. Die einzige Figur zeigt eine Seitenansicht eines erfindungsgemäßen Bandfilters.

Das in der Zeichnung dargestellte, erfindungsgemäße Bandfilter 1 weist ein kastenförmiges Gehäuse 2 auf, dessen unterer Bereich eine Auffangwanne für gefilterte Flüssigkeit (Filtrat) bildet. An Innenseiten von Seitenwänden 3 des Gehäuses 2 sind Kreisringe aus Kunststoff als Gleitlager 4 für Bandführungen 5 angebracht. Die Bandführungen 5 sind ebenfalls Kreisringe aus Kunststoff, die innen drehbar gelagert sind, d. h. die Bandführungen 5 befinden sich außen auf den Gleitlagern 4. Möglich sind auch fest an den Innenseiten der Seitenwände 3 angebrachte, beispielsweise leistenförmige Bandführungen (nicht dargestellt). Solche festen Bandführungen sind vorzugsweise bogenförmig, müssen aber nicht kreisförmig sein. An ihnen gleitet ein Filterband an konvexen Außenseiten entlang. Die Seitenwände 3 des Gehäuses 2 des Bandfilters 1 sind parallel zueinander und weisen Abstand voneinander auf, so dass sich die Bandführungen 5 in zueinander parallelen und voneinander beabstandten Ebenen befinden.

Um nahezu eine untere Hälfte der im Ausführungsbeispiel kreisförmigen Bandführungen 5 ist ein Filterband 6 herumgeführt, das außen an den Bandführungen 5 anliegt. Im Bereich der Bandführungen 5 bildet das Filterband 6 eine Filtermulde 7, die an Stirnseiten von den Seitenwänden 3 des Gehäuses 2 des Bandfilters 1 begrenzt wird. Die Seitenwände 3 bilden Wandungen der Filtermulde 7, Aufgrund der Kreisform der Bandführungen 5 ist die Filtermulde 7 im Ausführungsbeispiel zylinderschalenförmig. Mit feststehenden Bandführungen sind auch andere Formen der Filtermulde 7 möglich (nicht dargestellt)

Das Filterband 6 ist beispielsweise ein Vlies, das von einer Vorratsrolle 8 abgewickelt wird, die drehbar im Gehäuse 2 gelagert ist. Das von der Vorratsrolle 8 kommende Filterband 6 wird um die die Bandführungen 5 bildenden, an den Innenseiten der Seitenwände 3 des Gehäuses 2 drehbar gelagerten Kreisringe herum zu einer Ausleitstelle geführt, an der das Filterband 6 um eine Umlenkrolle 9 herum aus dem Gehäuse 3 des Bandfilters 1 ausgeleitet wird. Das Filterband 6 gelangt zusammen mit einem an ihm haftenden Filterkuchen in einen Sammelbehälter 10.

Im Bereich der Filtermulde 7 ist ein Stützband 11 auf der Außenseite des Filterbandes 6 ebenfalls um die Bandführungen 5 herum geführt. Das Stützband 11 ist als Stahlgliederband ausgebildet, im Ausführungsbeispiel ist es ein Wabenband. Andere Stützbänder sind möglich, auch solche nicht aus Stahl und/oder ohne Glieder (nicht dargestellt). Das Stützband 11 weist vorzugsweise große Öffnungen auf und ist jedenfalls durchlässig für eine zu filternde Flüssigkeit. Das Filterband 6 und das Stützband 11 sind (fast) so breit wie eine Innenbreite des Gehäuses 2 des erfindungsgemäßen Bandfilters 1, das Filterband 6 und das Stützband 11 reichen auf Außenseiten der Bandführungen 5 und bis (nahe) an die Inneseiten der Seitenwände 3 des Gehäuses 2. Das Stützband 11 stützt das Filterband 6 von außen bzw. von unten und hält Seitenränder des Filterbandes 6 in Anlage an den die Bandführungen 5 bildenden, drehbar gelagerten Kreisringen. Das Stützband 11 ist ein Endlosband, das unter der Filtermulde 7 hindurch im unteren Bereich des Gehäuses 2 rückgeführt ist. Das Stützband 11 läuft um Umlenkrollen 9, 12 um, wobei um eine der Umlenkrollen 9 auch das Filterband 6 an der Ausleitstelle umgelenkt wird. Diese Umlenkrolle 9 ist mittels eines Elektromotors 13 mit angeflanschtem Untersetzungs- und Winkelgetriebe antreibbar (es ist auch ein Antrieb einer anderen Umlenkrolle 12 möglich; nicht dargestellt). Über die Umlenkrolle 9 treibt der Elektromotor 13 das Stützband 11 und das Filterband 6 an. Die als drehbar gelagerte Kreisringe ausgeführten Bandführungen 5 drehen mit dem Filterband 6 mit.

Die Zuführung zu filternder Flüssigkeit in die Filtermulde 7 ist vergleichsweise frei von oben möglich, da beim erfindungsgemäßen Bandfilter 1 die Filtermulde 7 von oben nicht abgedeckt sein muss und das Bandfilter 1 oberhalb der Filtermulde 7 keine die Einleitung der zu filternden Flüssigkeit störenden Bauteile aufweist. Im dargestellten und beschriebenen Ausführungsbeispiel der Erfindung erfolgt die Einleitung zu filternder Flüssigkeit in die Filtermulde 7 mit einem Einlaufkanal 14 innerhalb der Gleitlager 4 der Bandführungen 5 durch eine der beiden Seitenwände 3 des Gehäuses 2 des Bandfilters 1, die die Filtermulde 7 an den Stirnseiten begrenzen.

Die zu filternde Flüssigkeit tritt aus der Filtermulde 7 durch das Filterband 6 und das durchlässige Stützband 11 durch und tropft in den unteren Bereich des Gehäuses 2, das die Auffangwanne unterhalb der Filtermulde 7 bildet. Aus der Auffangwanne läuft die gefilterte Flüssigkeit durch einen nicht gezeichneten Auslauf ab. Beim Durchtritt durch das Filterband 6 setzen sich Schmutzpartikel aus der zu filternden Flüssigkeit auf einer Innenseite des Filterbandes 6 ab und bauen einen gewünschten Filterkuchen auf, der die Filterwirkung des Filterbandes 6 verbessert. Um die Schmutzpartikel aus der Filtermulde 7 zu fördern, wird das Filterband 6 zusammen mit dem Stützband 11 mittels des Elektromotors 13 über die Umlenkrolle 9 angetrieben, d. h. in Richtung der Ausleitstelle gefördert. Das Filterband 6 transportiert den auf ihm abgesetzten Filterkuchen über die Umlenkrolle 9 auf der Ausleitseite und gelangt zusammen mit dem Filterkuchen in den Sammelbehälter 10. Der Antrieb des Filterbandes 6 kann kontinuierlich oder auch schrittweise bei Bedarf erfolgen. Das Filterband 6 kann in Abhängigkeit von einem Flüssigkeitspegel in der Filtermulde 7 angetrieben werden.

Mit einer Spanneinrichtung 15, die an einer der Umlenkrollen 12 angreift, ist das Stützband 11 spannbar und drückt die beiden Seitenränder der Filterbandes 6 von außen gegen die Bandführungen 5. Außen bzw. unter dem Stützband 11 sind Stützrollen 16 angeordnet, die sich von Seitenwand 3 zu Seitenwand 3 über die Innenbreite des Gehäuses 2 erstrecken und das Stützband 11 auf dessen gesamter Breite abstützen. Es sind mehrere Stützrollen 16 über eine Länge der Bandführungen 5 im Bereich der Filtermulde 7 angeordnet. Die Stützrollen 16, die allgemein auch als Stützen aufgefasst werden können, stützen das Stützband 11 und mit dem Stützband 11 das Filterband 6 gegen Durchbiegen in einer Querrichtung ab. Das vermeidet, dass sich die Seitenränder des Filterbandes 6 einander nähern ' und zur Seite nach innen von den Bandführungen 5 gezogen werden. Außerdem drücken die Stützrollen 16 die Seitenränder des Filterbandes 6 über das Stützband 11 von außen bzw. von unten gegen die Bandführungen 5, so dass die Seitenränder des Filterbandes 6 außen an den Bandführungen 5 anliegen und keine zu filternde Flüssigkeit ungefiltert zwischen den Bandführungen 5 und dem Filterband 6 durchtritt.

Die Stützrollen 16 weisen Verstelleinrichtungen 17 auf, die im Ausführungsbeispiel auf Außenseiten der Seitenwände 3 des Gehäuses 2 des Bandfilters 1 angeordnet sind. Mit den Verstelleinrichtungen 17 lassen sich die Stützrollen 16, die wie gesagt allgemein auch als Stützen aufgefasst werden können, quer zu den Bandführungen 5 bewegen, so dass über das Stützband 11 die Seitenränder des Filterbandes 6 mit einstellbarer Andruckkraft von außen gegen die Bandführungen 5 gedrückt werden können. Die Stützrollen 16 entlasten auch die Spanneinrichtung 15. Zum Einführen eines neuen Filterbandes 6 zwischen die Bandführungen 5 und das Stützband 11 können mit den Verstelleinrichtungen 17 das Stützband 11 zusammen mit den Stützrollen 16 in einen Abstand von den Bandführungen 5 gebracht werden.

Im Ausführungsbeispiel sind die Verstelleinrichtungen 17 wie geschrieben auf Außenseiten der Seitenwände 3 des Gehäuses 2 des Bandfilters 1 angeordnet, sie weisen Ösenschrauben auf, sich über Schraubendruckfedern an Widerlagern 18 abstützen, die bezogen auf die Bandführungen 5 radial innerhalb der jeweiligen Stützrolle 16 außen an den Seitenwänden 3 des Gehäuses 2 des Bandfilters 1 angebracht sind. Ein Spannen und Lockern erfolgt mit auf die Ösenschrauben geschraubten Muttern. Es sind andere Ausführungen und/oder Anordnungen der Verstelleinrichtungen 17 möglich.

## Patentansprüche

1. Bandfilter, mit einem Filterband (6), das entlang konvexer Seiten von bogenförmigen Bandführungen (5) geführt ist, so dass es eine Filtermulde (7) bildet, mit einem fluidurchlässigen Stützband (11), das auf einer den Bandführungen (5) abgewandten Außenseite des Filterbandes (6) angeordnet ist und an dessen den Bandführungen (5) zugewandter Innenseite das Filterband (6) anliegt, und mit einer Stütze (16), die das Stützband (11) auf einer den Bandführungen (5) abgewandten Außenseite an und/oder zwischen den Bandführungen (5) stützt, **dadurch gekennzeichnet, dass** das Bandfilter (1) eine Verstelleinrichtung (17) aufweist, mit der die Stütze (16) quer zu den Bandführungen (5) verstellbar ist.

2. Bandfilter nach Anspruch 1, **dadurch gekennzeichnet, dass** sich die Stütze (16) über eine Breite des Stützbandes (11) erstreckt.

3. Bandfilter nach Anspruch 1 oder 2, **dadurch gekennzeichnet, dass** das Bandfilter (1) mehrere Stützen (16) aufweist, die im Bereich der Filtermulde (7) über eine Länge der Bandführungen (5) verteilt angeordnet sind.

4. Bandfilter nach einem der Ansprüche 1 bis 3, **dadurch gekennzeichnet, dass** die Stütze eine Stützrolle (16) aufweist.

5. Bandfilter nach einem der vorhergehenden Ansprüche, **dadurch gekennzeichnet, dass** das Bandfilter (1) zwei parallele Seitenwände (3) aufweist, an deren einander zugewandten Innenseiten die Bandführungen (5) angeordnet sind.

6. Bandfilter nach einem der vorhergehenden Ansprüche, **dadurch gekennzeichnet, dass** das Stützband (11) ein Gliederband, insbesondere ein Wabenband ist.

## Claims

1. Belt filter, comprising a filter belt (6) which is guided along convex sides by curved belt guides (5) such that it forms a filter trough (7), comprising a fluid-permeable supporting belt (11) which is arranged on an outer face of the filter belt (6) facing away from the belt guides (5) and on the inner face, facing the belt guides (5), of which the filter belt (6) rests, and comprising a support (16) which supports the supporting belt (11) on and/or between the belt guides (5) on an outer face facing away from the belt guides (5), **characterised in that** the belt filter (1) has an adjusting device (17) by means of which the support (16) can be adjusted transversely to the belt guides (5).

2. Belt filter according to claim 1, **characterised in that** the support (16) extends over a width of the supporting belt (11).

3. Belt filter according to either claim 1 or claim 2, **characterised in that** the belt filter (1) has a plurality of supports (16) which are distributed over a length of the belt guides (5) in the region of the filter trough (7).

4. Belt filter according to any of claims 1 to 3, **characterised in that** the support has a support roller (16).

5. Belt filter according to any of the preceding claims, **characterised in that** the belt filter (1) has two parallel side walls (3), on the inner faces, facing one another, of which the belt guides (5) are arranged.

6. Belt filter according to any of the preceding claims, **characterised in that** the supporting belt (11) is a link belt, in particular a honeycomb belt.

## Revendications

1. Filtre à bande comprenant une bande filtrante (6) guidée le long de faces convexes de guides (5) configurés en arc de cercle, de manière qu'elle forme une auge de filtration (7) ; un ruban de soutien (11) perméable aux fluides, qui est disposé sur une face extérieure de la bande filtrante (6), pointant à l'opposé des guides (5) de ladite bande, et contre la face intérieure duquel, pointant vers lesdits guides (5) de la bande, ladite bande filtrante (6) est en applique ; et un support (16) procurant un appui audit ruban de soutien (11) au niveau des guides (5) de la bande, et/ou entre ces derniers, sur une face extérieure pointant à l'opposé desdits guides (5) de ladite bande, **caractérisé par le fait que** ledit filtre (1) à bande est muni d'un dispositif de réglage (17) par lequel le support (16) peut être réglé transversalement par rapport aux guides (5) de ladite bande.

2. Filtre à bande selon la revendication 1, **caractérisé par le fait que** le support (16) s'étend sur une largeur du ruban de soutien (11).

3. Filtre à bande selon la revendication 1 ou 2, **caractérisé par le fait que** ledit filtre (1) à bande compte plusieurs supports (16) agencés avec répartition, dans la région de l'auge de filtration (7), sur une longueur des guides (5) de la bande.

4. Filtre à bande selon l'une des revendications 1 à 3, **caractérisé par le fait que** le support comporte un rouleau d'appui (16).

5. Filtre à bande selon l'une des revendications précédentes, **caractérisé par le fait que** ledit filtre (1) à bande comporte deux parois latérales parallèles (3) au niveau des faces intérieures desquelles, pointant l'une vers l'autre, les guides (5) de la bande sont implantés.

6. Filtre à bande selon l'une des revendications précédentes, **caractérisé par le fait que** le ruban de soutien (11) est un ruban à maillons, notamment un ruban alvéolé.
